Europäisches Patentamt

European Patent Office

Office européen des brevets

(11) Numéro de publication: **0 005 705**

**A1**

## (12) DEMANDE DE BREVET EUROPEEN

(21) Numéro de dépôt: **78400221.4**

(22) Date de dépôt: **08.12.78**

(51) Int. Cl.²: **G 02 B 23/02**
**G 02 B 17/08**

(30) Priorité: **01.06.78 FR 7816381**

(43) Date de publication de la demande:
**12.12.79 Bulletin 79/25**

(84) Etats Contractants Désignés:
**BE CH DE GB IT LU NL SE**

(71) Demandeur: **Delage, Jean**
**3 rue Paul Bert**
**F-94400 Vitry-sur-Seine(FR)**

(72) Inventeur: **Delage, Jean**
**3 rue Paul Bert**
**F-94400 Vitry-sur-Seine(FR)**

(74) Mandataire: **Bonnetat, Christian et al,**
**Cabinet PROPI Conseils 23 rue Léningrad**
**F-75008 Paris(FR)**

(54) Lunette optique et son application à la réalisation de jumelles.

(57) Selon l'invention, une lunette optique terrestre est caractérisée en ce qu'elle comporte au moins un premier miroir concave (1) dirigé vers un objet à observer, un second miroir concave (7) dont l'axe (8) coupe celui (6) dudit premier miroir concave et un premier miroir plan (4) de faible dimension disposé au point de concours des axes (6) et (8) desdits miroirs concaves (1) et (7), ceux-ci regardant ledit miroir plan (4) et étant disposés de façon que le plan image dudit premier miroir concave (1) se trouve à l'emplacement dudit premier miroir plan (4) et que celui-ci renvoie ladite image vers le second miroir concave (7) qui la transmet à l'oculaire (9).

Application à la réalisation de jumelles.

Fig.1

Croydon Printing Company Ltd.

-1-

## Lunette optique et son application à la réalisation de jumelles.

La présente invention concerne une lunette optique terrestre et son application à la réalisation de jumelles.

On sait que, dans les lunettes optiques terrestres connues, on associe à un objectif convergent, soit un oculaire divergent (lunette de galilée), soit un oculaire convergent. Dans ce dernier cas, afin d'obtenir une image droite, il est indispensable de placer, entre l'objectif et l'oculaire, un dispositif redresseur ou véhicule, formé soit de lentilles, soit de prismes.

La lunette et les jumelles selon l'invention présentent une structure totalement différente de celle des lunettes ou jumelles connues et permettent d'obtenir un fort grossissement.

A cette fin, selon l'invention, la lunette optique terrestre pourvue d'un oculaire est remarquable en ce qu'elle comporte au moins un premier miroir concave dirigé vers un objet à observer, un second miroir concave dont l'axe coupe celui du premier miroir et un premier miroir plan de faible dimension disposé au point de concours des axes desdits miroirs concaves, ceux-ci regardant ledit miroir plan et étant disposés de façon que le plan image dudit premier miroir concave se trouve à l'emplacement dudit premier miroir plan et que celui-ci renvoie ladite image vers le second miroir concave qui la transmet à l'oculaire.

De préférence, les axes des deux miroirs concaves sont rectangulaires et le miroir plan est incliné de 45° sur chacun desdits axes.

Il peut être avantageux, notamment pour des raisons d'encombrement de disposer l'oculaire de façon que son axe soit parallèle à celui du premier miroir concave et de prévoir, entre ledit second miroir concave et l'oculaire, un second miroir plan de renvoi de l'image.

La lunette selon l'invention ne nécessite donc pas de comporter un objectif, dans le sens habituellement donné à ce terme qui désigne une lentille ou un ensemble de lentilles convergent à travers lequel est vu l'objet. Toutefois, il est avantageux de prévoir, entre l'objet à observer et le premier miroir concave, un dispositif dioptrique, sans puissance, c'est-à-dire non convergent, destiné à corriger les aberrations sphériques et la coma.

Dans ce cas, ce dispositif correcteur dioptrique peut servir de support au premier miroir plan. Ce premier miroir plan peut être constitué par une face polie et/ou métallisée pratiquée sur un barreau encastré dans ledit dispositif.

On remarquera que la lunette selon l'invention donne lieu à une image droite. En effet, l'image est inversée par le premier miroir concave et redressée par le second, tandis que les deux miroirs plans n'affectent pas ce redressement. Le second miroir plan de renvoi permet d'obtenir une image parallèle à l'objet et de même sens que celui-ci.

La mise au point de la lunette pourrait être réalisée en prévoyant un système mécanique permettant de faire varier la distance entre le premier miroir concave et le premier miroir plan. Toutefois, dans un mode de réalisation simple et avantageux, destiné à l'observation d'objets éloignés, la distance entre le premier miroir concave et le premier miroir plan est rigidement fixée de façon que le foyer dudit premier miroir concave se trouve au moins approximativement sur ledit premier miroir plan et la mise au point s'effectue par réglage de l'oculaire.

Le second miroir concave est disposé de façon que la distance de son plan image (au voisinage de l'oculaire) à son centre soit n fois supérieure à la distance de ce dernier à son plan objet (confondu avec le plan image du premier miroir concave). Par suite, le grossissement de ce second miroir concave est voisin de n . Si le premier miroir concave présente une distance focale F, la focale résultante de l'agencement des deux miroirs concaves est donc approximativement égale à F x n . De plus, si la distance focale de l'oculaire est choisie égale à f, le grossissement G de la lunette selon l'invention peut donc s'écrire :

$$G = \frac{F \times n}{f} \ .$$

Ainsi, on peut choisir le second miroir concave pour déterminer n et donc G.

Dans un mode de réalisation pratique, les distances focales d'un premier miroir concave et de l'oculaire avaient été choisies respectivement égales à 100 mm et 25 mm, alors que le plan image du second miroir concave était trois fois plus éloigné de celui-ci que le plan objet correspondant. Il en résulte que, dans ce mode de réalisation, le grossissement était approximativement

$$G = \frac{100 \times 3}{25} = 12.$$

Pour obtenir des jumelles selon l'invention, on associe deux lunettes du type décrit ci-dessus, disposées symétriquement par rapport à un plan vertical, de façon que l'écartement entre les oculaires corresponde à l'écartement usuel des yeux humains. Lorsque l'on désire utiliser des jumelles avec deux lunettes selon l'invention, il est particulièrement avantageux que chacune de celles-ci comporte le second miroir plan de renvoi mentionné ci-dessus, de façon que les lignes de visée des lunettes puissent être plus écartées que les axes des oculaires.

Les figures du dessin annexé feront bien comprendre comment l'invention peut être réalisée.

La figure 1 donne le schéma optique d'une lunette selon l'invention.

La figure 2 montre des jumelles réalisées par la combinaison de deux lunettes semblables à celle de la figure 1.

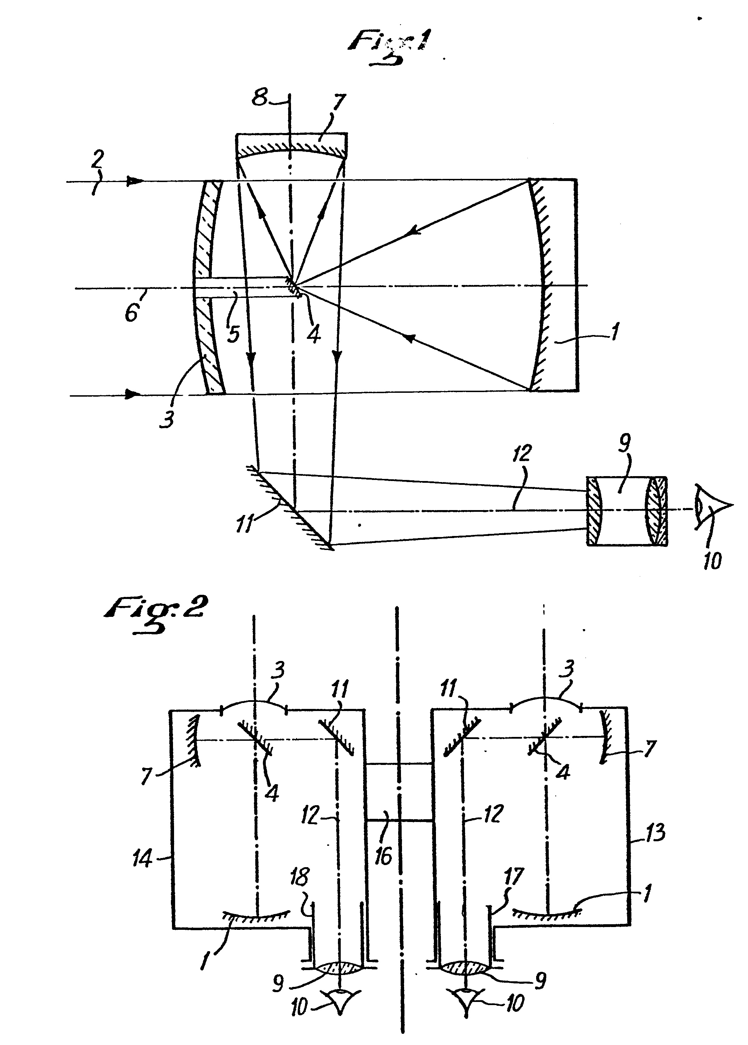

La lunette optique terrestre, montrée par la figure 1, comporte un premier miroir concave 1 recevant le faisceau de rayons parallèles 2 émis par un objet éloigné (non représenté),après passage dudit faisceau 2 à travers une correctrice 3, sans puissance, de correction d'aberrations sphériques et de coma. Le miroir 1 fait converger le faisceau parallèle 2 sur la face plane 4 d'un barreau 5, encastré au centre de la lame 3. La face plane 4 fait office de miroir plan. A cet effet, le barreau 5 peut être métallique, par exemple en acier rapide, et la face 4 peut être traitée à l'aluminium pour présenter un coefficient de réflexion élevé. Le miroir sphérique 1 et la lentille 3 présentent un axe commun 6, formant l'axe de visée, la face plane 4 étant inclinée de 45° sur ledit axe 6.

La face plane 4 renvoie l'image reçue du miroir sphérique 2 sur un autre miroir concave 7, dont l'axe 8 rencontre l'axe 6 sur ladite face 4. L'axe 8 est orthogonal à l'axe 6, de sorte que la face 4 est également inclinée de 45° sur l'axe 8.

Le miroir 7 renvoie l'image reçue du miroir 4, sur un oculaire 9, derrière lequel est disposé l'oeil 10 de l'observateur. Entre le miroir concave 7 et l'oculaire 9 est disposé un miroir plan 11 de renvoi, permettant d'agencer l'axe 12 de l'oculaire 9 parallèlement à l'axe 6.

Sur la figure 2, on a représenté schématiquement des jumelles constituées de deux lunettes conformes à la figure 1. Chaque système optique 1, 3, 4, 7, 9, 11 est enfermé dans un boîtier 13 ou 14 respectivement, de sorte que l'ensemble soit symétrique par rapport à un plan vertical 15, lesdits boîtiers 13 et 14 étant reliés par une entretoise réglable 16.

Dans ce mode de réalisation, les oculaires 9 sont montés à l'extrémité de tubes 17, 18 pouvant coulisser respectivement par rapport aux boîtiers 13 et 14, coaxialement aux axes 12.

Ainsi , les miroirs plans 4 étant montés rigidement dans le plan focal des miroirs concaves 1, la mise au point peut être réalisée par déplacement des oculaires 9 en coulissement le long des axes 12. Bien entendu, les déplacements des deux tubes 17 et 18 et, donc des deux oculaires 9, peuvent être couplés par tout dispositif connu, mais non représenté sur la figure 2.

REVENDICATIONS

1.- Lunette optique terrestre pourvue d'un oculaire (9),
caractérisée en ce qu'elle comporte au moins un premier miroir
concave (1) dirigé vers un objet à observer, un second miroir
concave (7) dont l'axe (8) coupe celui (6) dudit premier miroir
concave et un premier miroir plan (4) de faible dimension disposé
au point de concours des axes (6) et (8) desdits miroirs concaves
(1) et (7) , ceux-ci regardant ledit miroir plan (4) et étant disposés de façon que le plan image dudit premier miroir concave (1)
se trouve à l'emplacement dudit premier miroir plan (4) et que
celui-ci renvoie ladite image vers le second miroir concave (7)
qui la transmet à l'oculaire (9).

2.- Lunette selon la revendication 1,
caractérisée en ce que les axes (6) et (8) des deux miroirs
concaves (1) et (7) sont rectangulaires et le miroir plan (4) est
incliné de 45° sur chacun desdits axes (6) et (8).

3.- Lunette selon l'une des revendications 1 ou 2,
caractérisée en ce que l'oculaire (9) est disposé de façon que
son axe (12) soit parallèle à celui (6) du premier miroir concave
et en ce que, entre ledit second miroir concave (7) et l'oculaire
(9), est disposé un second miroir plan (11) de renvoi de l'image.

4.- Lunette selon l'une des revendications 1 à 3,
caractérisée en ce que, entre l'objet à observer et le premier
miroir concave (1), est disposé un dispositif dioptrique correcteur (3) sans puissance.

5.- Lunette selon la revendication 4,
caractérisée en ce que ledit dispositif 3 sert de support au
premier miroir plan 4.

6.- Lunette selon la revendication 5,
caractérisée en ce que le premier miroir plan (4) est constitué
par une face polie portée par un barreau (5) encastré dans ledit dispositif correcteur (3).

7.- Lunette selon l'une des revendications 1 à 6, caractérisée en ce que la distance entre le premier miroir concave (1) et le premier miroir plan (4) est rigidement fixée de façon que le foyer dudit premier miroir concave (1) se trouve au moins approximativement sur ledit premier miroir plan (4) et la mise au point s'effectue par réglage de l'oculaire (9).

8.- Lunette selon l'une quelconque des revendications 1 à 7, dans laquelle le premier miroir concave (1) et l'oculaire (9) présentent des distances focales respectivement égales à F et f, caractérisée en ce que le second miroir concave (7) est choisi pour que le grossissement G de la lunette soit approximativement égal à

$$G = n.\frac{F}{f} \text{ , } \underline{n} \text{ étant un nombre supérieur à 1.}$$

9.- Jumelles, caractérisées en ce qu'elles sont constituées par l'association de deux lunettes identiques, telles que spécifiées sous l'une quelconque des revendications précédentes.

Fig.1

Fig.2

# RAPPORT DE RECHERCHE EUROPEENNE

**Office européen des brevets**

Numéro de la demande

EP 78 400 221.4

## DOCUMENTS CONSIDERES COMME PERTINENTS

| Catégorie | Citation du document avec indication, en cas de besoin, des parties pertinentes | Revendica-tion concernée |
|---|---|---|
| X | FR - A - 819 827 (H. WILD)<br>* revendications 1, 2, 4, 6; fig. 3 *<br>--- | 1-4,<br>7,9 |
| | CH - A - 284 837 (DE OUDE DELFT)<br>* fig. 1 *<br>--- | 4 |
| A | FR - A - 2 346 734 (RECHERCHES ET ETUDES D'OPTIQUE ET DE SCIENCES CONNEXES)<br>* revendications 1 et 10 *<br>--- | 1,9 |
| A | GB - A - 1 104 297 (A.H. HALE)<br>* revendication 2 *<br>--- | 1,9 |
| A | FR - A - 1 339 739 (OPTISCHE WERKE G. RODENSTOCK)<br>* revendication 1 *<br>-- | |
| A | DE - B - 1 009 821 (ERNST LEITZ)<br>* revendications 1 et 2 *<br>---- | |

**CLASSEMENT DE LA DEMANDE (Int. Cl.³)**

G 02 B 23/02
G 02 B 17/08

**DOMAINES TECHNIQUES RECHERCHES (Int. Cl.³)**

G 02 B 17/00
G 02 B 23/02

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

| X | Le présent rapport de recherche a été établi pour toutes les revendications |
|---|---|

| Lieu de la recherche | Date d'achèvement de la recherche | Examinateur |
|---|---|---|
| Berlin | 20-07-1979 | FUCHS |

OEB Form 1503.1  06.78